# EUROPÄISCHE PATENTANMELDUNG

(11) **EP 4 568 080 A1**
(43) Veröffentlichungstag der Anmeldung: **11.06.2025**
(21) Anmeldenummer: 23213982.4
(22) Anmeldetag: 04.12.2023
(51) Int. Cl.: H02K 15/00, H02K 17/16

(54) **KURZSCHLUSSLÄUFERKÄFIG, ROTORPAKET UND MONTAGEVERFAHREN**

(71) Anmelder: Siemens Aktiengesellschaft, 80333 München (DE)
(72) Erfinder: Mutzbauer, Frank, 97618 Hollstadt (DE)
(74) Vertreter: Siemens Patent Attorneys

(57) **Zusammenfassung**

Der erfindungsgemäße Kurzschlussläuferkäfig (1) für einen Asynchronmotor weist eine vordefinierte Anzahl (n) an Kurzschlussstäben (2) zum Einsetzen in eine, in einem Rotorblechpaket (11) des Asynchronmotors ausgebildete, vordefinierte Anzahl (m) an Nuten. Jeder der Kurzschlussstäbe (2) weist einen Kopfabschnitt (3) mit einem daran angeformten stabförmigen Grundkörper (4), dessen dem Kopfabschnitt (3) abgewandtes Ende einen Fußbereich (5) bildet, auf. Die Kurzschlussstäbe (2) sind dabei parallel zueinander orientiert und derart nebeneinander angeordnet, dass jeder Kopfabschnitt (3) eines Kurzschlussstabes (2) mit den Fußbereichen (5) der beiden benachbart angeordneten Kurzschlussstäbe (2) verbunden ist, sodass durch die Kopfabschnitte (3) und die damit verbundenen Fußbereiche (5) an beiden Enden des Kurzschlussläuferkäfigs (1) jeweils ein Kurzschlussring (9) gebildet ist. Aufgrund der antiparallelen Anordnung benachbarter Kurzschlussstäbe (2) wird durch Verbinden der Kopfabschnitte (3) und Fußbereiche (5) jeweils ein Kurzschlussring (9) gebildet, ohne dass hierfür zusätzliche Bauteile oder Montageschritte erforderlich sind. Weiterhin weisen die Kurzschlussstäbe (2), da sie aus massivem Halbzeug gebildet sind, keine Lunker, welche die Funktionsfähigkeit des Kurzschlussläuferkäfigs (1) beeinträchtigen könnten, auf.

## Beschreibung

Die Erfindung betrifft einen aus einer Mehrzahl an Nutenstäben gebildeten Kurzschlussläuferkäfig für einen Asynchronmotor sowie ein Rotorpaket mit einem derartigen Kurzschlussläuferkäfig. Ferner betrifft die Erfindung ein Montageverfahren zur Herstellung eines derartigen Rotorpakets.

Drehstrom-Asynchronmaschinen, die auch als Drehstrom-Induktionsmaschinen bezeichnet werden, können entweder als Generator oder als Motor eingesetzt werden. Asynchronmaschinen besitzen einen passiven Läufer, auch Rotor genannt, der entweder ständig oder fallweise kurzgeschlossen wird. Wird der Läufer ständig kurzgeschlossen so bezeichnet man ihn auch als Kurzschlussläufer. Der Kurzschlusskäfig einer Asynchronmaschine besteht aus elektrisch leitenden Kurzschlussstäben und Kurzschlussringen. Die Kurzschlussstäbe durchziehen das Rotorblechpaket und sind an den Enden durch die Kurzschlussringe elektrisch leitend verbunden.

Eine solcher Kurzschlusskäfig ist beispielsweise aus der Offenlegungsschrift DE 4013674 A1 bekannt. Bei diesem Kurzschlusskäfig werden die Kurzschlussstäbe sowie die Kurzschlussringe durch Aluminiumguss hergestellt. Dabei wird die flüssige Aluminium-Schmelze in eine entsprechende Druckgussform, die ein darin angeordnetes Rotorblechpaket umgibt, gedrückt, wo sie anschließend erstarrt. Hierbei handelt es sich um ein allgemein bekanntes, kostengünstiges Herstellungsverfahren für die Kurzschlussläuferkäfig von Drehstrom-Asynchronmaschinen. Nachteilig ist jedoch, dass wegen des gegenüber Kupfer relativ hohen spezifischen elektrischen Widerstandes von Aluminium die im Käfigläufer entstehenden Verluste entsprechend hoch sind, was zu einer stärkeren Erwärmung des Läufers führt.

Kurzschlussstäbe und Kurzschlussringe, welche mittels Aluminiumguss hergestellt wurden, weisen verfahrensbedingt Hohlstellen, sogenannte Lunker, auf, welche bei der Erstarrung gegossener Teile entstehen. Durch die Bildung derartiger Lunker werden die Materialquerschnitte der Kurzschlussstäbe sowie der Kurzschlussringe zum Teil deutlich reduziert, woraus ein geringerer Wirkungsgrad, elektromagnetische Asymmetrien sowie eine erhöhte Neigung zu Vibrationen resultieren können.

Es ist ferner bekannt, den Kurzschlusskäfig von Asynchronmaschinen aus Kupferstäben und Kupferringen zu fertigen. Wegen der hohen Schmelztemperatur von Kupfer lassen sich solche Kurzschlusskäfige nur mit großem Aufwand im Gussverfahren herstellen. Deshalb werden die Kupferstäbe einzeln in die Läufernuten eingebracht und anschließend mit den gesondert gefertigten Kurzschlussringen verbunden. Ein solcher Läufer weist zwar geringere Verluste auf, seine Herstellung ist jedoch sehr arbeitsaufwendig.

Der Erfindung liegt daher die Aufgabe zugrunde, einen alternativen Kurzschlussläuferkäfig, ein Rotorpaket mit einem derartigen Kurzschlussläuferkäfig sowie ein hierfür geeignetes Montageverfahren bereitzustellen, welche die vorstehend genannten Nachteile zumindest teilweise überwinden und sich durch geringere Herstell- und Montagekosten auszeichnen.

Diese Aufgabe wird erfindungsgemäß durch den Kurzschlussläuferkäfig, das Rotorpaket sowie das Montageverfahren gemäß den unabhängigen Ansprüchen gelöst. Vorteilhafte Ausgestaltungen sind Gegenstand der abhängigen Ansprüche.

Der erfindungsgemäße Kurzschlussläuferkäfig für einen Asynchronmotor weist eine vordefinierte Anzahl n an Kurzschlussstäben zum Einsetzen in eine, in einem Rotorblechpaket des Asynchronmotors ausgebildete, vordefinierte Anzahl m an Nuten auf. Jeder der Kurzschlussstäbe weist dabei einen stabförmigen Grundkörper mit einem daran angeformten Kopfabschnitt auf, wobei ein dem Kopfabschnitt abgewandtes Ende des Grundkörpers einen Fußbereich bildet. Die Kurzschlussstäbe sind dabei parallel zueinander orientiert und derart nebeneinander angeordnet, dass jeder Kopfabschnitt eines Kurzschlussstabes mit den Fußbereichen der beiden benachbart angeordneten Kurzschlussstäbe verbunden ist, sodass durch die Kopfabschnitte und die damit verbundenen Fußbereiche an beiden Enden des Kurzschlussläuferkäfigs jeweils ein Kurzschlussring gebildet ist.

Die Kurzschlussstäbe weisen einen stabförmigen Grundkörper, der aufgrund seiner Geometrie in die Nuten des Rotorblechpakets einführbar ist, sowie einen im Vergleich dazu verdickten Kopfabschnitt auf. Aufgrund der gegengleichen oder antiparallelen Anordnung benachbarter Kurzschlussstäbe wird durch die abwechselnde Anordnung von Kopfabschnitt und Fußbereich zu beiden Stirnseiten des Kurzschlussläuferkäfigs jeweils ein Kurzschlussring gebildet, so dass auf zusätzliche Bauteile zur Realisierung der Kurzschlussringe verzichtet werden kann. Der Montageaufwand wird hierdurch deutlich vereinfacht.

In einer vorteilhaften Weiterbildung des Kurzschlussläuferkäfigs sind die Kurzschlussstäbe mittels eines additiven Fertigungsverfahrens herstellbar.

Additive Fertigungsverfahren wie 3D-Druck oder Rapid Prototyping zählen zu den urformenden Fertigungsverfahren, bei denen ein Werkstück aus formlosem Stoff, beispielsweise Metallschmelzen oder -granulat, aber auch aus Pasten oder Tonerden, hergestellt wird. Hieran kann sich ein Sinter-Prozessschritt anschließen. Diese Verfahren bieten den Vorteil einer relativ frei wählbaren Materialzusammensetzung sowie ihrer Eignung, kleine und kleinste Losgrößen bis Losgröße 1 ohne Werkzeug-Investitionen fertigen zu können, wobei die Bildung von Lunkern wirksam vermieden werden kann. Auf diese Weise werden die Materialquerschnitte der Kurzschlussstäbe sowie der Kurzschlussringe nicht durch Lunker geschwächt, so dass der Wirkungsgrad erhalten bleibt und elektromagnetische Asymmetrien sowie eine erhöhte Neigung zu Vibrationen wirksam vermieden werden können.

In einer weiteren vorteilhaften Weiterbildung des Kurzschlussläuferkäfigs sind die Kurzschlussstäbe durch Umformen oder Trennen aus einem Halbzeug gebildet.

Unter dem Begriff "Halbzeug" wird vorgefertigtes Rohmaterial sowie Werkstücke oder Halbfabrikate einfachster Bauform verstanden, die in der Regel aus einem einzelnen Material bestehen, das lediglich in eine grundlegende geometrische Form gebracht wurde. Unter dem Begriff "Umformen" wird ein fertigungstechnisches Verfahren verstanden, bei dem ein Werkstück verformt wird, ohne dass dabei Material hinzugefügt oder entfernt wird. Typische Umformverfahren sind beispielsweise das Walzen, Gesenkschmieden, Fließpressen, Strangpressen, Tiefziehen oder Biegen. Unter dem Begriff "Trennen" werden Fertigungsverfahren verstanden, bei denen die Form eines Werkstücks durch die Aufhebung des Werkstoffzusammenhalts an der Bearbeitungsstelle verändert wird. Hierzu zählen beispielsweise das Zerspanen (z.B. Sägen, Drehen oder Fräsen), aber auch das Stanzen, Brennschneiden oder Funkenerodieren.

Da die Kurzschlussstäbe durch Umformen aus massivem Halbzeug gebildet sind, weisen sie keinerlei Lunker auf. Die Materialquerschnitte der Kurzschlussstäbe sowie der Kurzschlussringe wird somit nicht durch Lunker geschwächt, so dass der Wirkungsgrad erhalten bleibt und elektromagnetische Asymmetrien sowie eine erhöhte Neigung zu Vibrationen wirksam vermieden werden können.

In einer weiteren vorteilhaften Weiterbildung des Kurzschlussläuferkäfigs ist der Kopfabschnitt durch Stauchen des Grundkörpers gebildet.

Durch Stauchen wird eine Längenänderung (Verkürzung) eines durch Druck beanspruchten Körpers, hier eines Kurzschlussstabs verstanden, wodurch sich im Gegenzug dessen Dicke vergrößert. Auf diese Weise sind die Kurzschlussstäbe aus einem einzigen Halbzeug einstückig herstellbar, ohne dass es für das Verbinden von Kopfabschnitt und Fußbereich eines zusätzlichen Fügeprozesses bedarf. Die Herstellung der Kurzschlussstäbe wird dadurch weiter vereinfacht.

In einer weiteren vorteilhaften Weiterbildung des Kurzschlussläuferkäfigs stellt der Kopfbereich einen Verbindungsbereich dar, über den zwei daran angeformte, parallel verlaufende stabförmige Grundkörper miteinander verbunden sind.

Auf diese Weise sind sogenannte "Hairpins" gebildet, die zwei miteinander verbundene, stabförmige Grundkörper mit jeweils einem Fußbereich aufweisen. Bei der Montage werden die beiden stabförmige Grundkörper in jeweils eine Nut des Rotorblechpakets eingeführt, wobei zwischen den beiden Nuten eine weitere Nut ausgebildet ist, in die einer der stabförmigen Grundkörper eines entsprechenden Hairpins in entgegengesetzter Richtung, d.h. von der anderen Stirnseite des Rotorblechpakets aus, in die betreffenden Nuten einführbar ist, so dass wiederum der Fußbereich eines Hairpins neben dem Kopfabschnitt des benachbart angeordneten Hairpins angeordnet ist. Bei einer geradzahlingen Nuten-Anzahl m wird dabei lediglich eine Anzahl n=m/2 Hairpins benötigt, wobei n eine natürliche gerade Zahl ist. Bei einer ungeradzahligen Nuten-Anzahl m kann die letzte nicht mittels Hairpins zu füllende Nut beispielsweise mit einem entsprechend geformten einzelnen Kurzschlussstab gefüllt werden. Durch die Reduktion der Anzahl der zu montierenden Bauteile wird der Aufwand für die Montage des Rotorpakets weiter reduziert.

In einer weiteren vorteilhaften Weiterbildung des Kurzschlussläuferkäfigs bestehen die Kurzschlussstäbe aus massivem Kupfer oder aus einer Kupferlegierung.

Insbesondere gegenüber dem zur Herstellung eines Kurzschlussläuferkäfigs häufig verwendeten Werkstoff Aluminium zeichnet sich Kupfer durch eine hohe elektrische Leitfähigkeit respektive einen geringen elektrischen Widerstand aus. Dies führt zu einer geringeren Erwärmung des Rotorpakets und damit zu einer geringeren Verlustleistung des Asynchronmotors.

In einer weiteren vorteilhaften Weiterbildung des Kurzschlussläuferkäfigs sind die Kurzschlussstäbe identisch. Der Kurzschlussläuferkäfig könnte zwar prinzipiell auch aus unterschiedlichen Stäben aufgebaut sein. Durch die Verwendung baugleicher Kurzschlussstäbe, d.h. identischer Gestalt mit identischen Abmessungen, kann die Teilevielfalt jedoch deutlich reduziert werden, wodurch die Lagerhaltungs- und Logistikkosten deutlich reduziert werden.

Das erfindungsgemäße Rotorpaket für einen Asynchronmotor weist ein Rotorblechpaket mit einer vordefinierten Anzahl m an Nuten sowie einer vordefinierten Anzahl n an Kurzschlussstäbe der vorstehend beschriebenen Art auf, welche jeweils in zumindest eine der Nuten des Rotorblechpakets eingeführt sind und Kontaktstellen zu benachbarten Kurzschlussstäben aufweisen und mit benachbarten Nutenstäben derart verbunden sind, dass sie einen Kurzschlusskäfig bilden.

Das Rotorblechpaket ist aus mehreren in einer Achsrichtung gestapelten Blechen gebildet und weist eine vordefinierte Anzahl m an Nuten auf, welche in Achsrichtung verlaufend kreisförmig um eine Achse herum angeordnet sind. In jeder Nut ist exakt ein Grundkörper eines Kurzschlussstabs einführbar, wobei dies in oder entgegen der Achsrichtung erfolgen kann. Werden baugleiche Kurzschlussstäbe verwendet, so entspricht bei Kurzschlussstäben mit nur einem Grundkörper die Anzahl m der Nuten der Anzahl n der Kurzschlussstäbe, während bei Kurzschlussstäben, die zwei Grundkörper aufweisen, den sogenannten Hairpins, die Anzahl n der benötigten Kurzschlussstäbe nur halb so groß ist wie die Anzahl m der im Rotorblechpaket ausgebildeten Nuten.

Entsprechend den vorstehenden Ausführungen ist der Kurzschlussläuferkäfig - d.h. die Kurzschlussstäbe mit den daran angeformten Kurzschlussringen - nicht durch Umgießen des Rotorblechpakets gebildet, sondern ist aus einzelnen Kurzschlussstäben aufgebaut, wodurch auch die Kurzschlussringe gebildet sind. Die Kurzschlussstäbe werden getrennt vom Rotorblechpaket hergestellt, das Rotorblechpaket ist nicht Bestandteil einer Gußform für den Kurzschlussläuferkäfig. Durch die wechselseitige, d.h. hinsichtlich ihrer Montagerichtung in bzw. entgegen der Achsrichtung abwechselnde Anordnung benachbarter Kurzschlussstäbe werden durch die Verbindung der Kopfabschnitte der Nutenstäbe mit den jeweils benachbart angeordneten Fußbereichen der (links und rechts) dazu benachbart angeordneten Kurzschlussstäbe zusätzlich die beiden Kurzschlussringe des Kurzschlussläuferkäfigs gebildet. Über die Kontaktstellen erfolgt die Verbindung der einzelnen Kurzschlussstäbe, d.h. des Kopfbereichs eines Kurzschlussstabs mit jeweils einem Fußbereich der beiden benachbart angeordneten Kurzschlussstäbe. Diese Verbindung ist durch ein geeignetes Fügeverfahren, beispielsweise Schweißen, Widerstandsschweißen, Löten oder Verpressen, herstellbar. Die Herstellung und Montage eines zusätzlichen Kurzschlussrings kann damit entfallen, wodurch der Montageaufwand deutlich vereinfacht wird.

Hinsichtlich der weiteren Vorteile des erfindungsgemäßen Rotorpakets wird auf die vorstehenden Ausführungen den erfindungsgemäßen Kurzschlussläuferkäfig betreffend verwiesen.

Das erfindungsgemäße Montageverfahren zur Herstellung eines wie vorstehend beschrieben gebildeten Rotorpakets eines Asynchronmotors, welches ein Rotorblechpaket mit einer vordefinierten Anzahl m in einer ersten Richtung parallel nebeneinander angeordneter Nuten aufweist, weist die Schritte
a) Bereitstellen des Rotorblechpakets,
b) Einführen zumindest eines ersten Kurzschlussstabs in der ersten Richtung in zumindest eine erste Nut,
c) Einführen zumindest eines zweiten Kurzschlussstabs in einer zur ersten Richtung entgegengesetzten zweiten Richtung in zumindest eine zur ersten Nut benachbarten zweite Nut, sowie
d) Verbinden der zueinander benachbart angeordneten ersten und zweiten Kurzschlussstäbe
auf. Bei diesem Montageverfahren werden die Kurzschlussstäbe nicht in die Nuten gegossen, sondern sind als Einzelteile hergestellt, die in die Nuten eingeschoben und anschließend miteinander verbunden werden, wodurch der Kurzschlussläuferkäfig sowie das Rotorpaket gebildet sind. Die einzelnen Nuten sind dabei orthogonal auf einer Kreislinie um die Achse des Blechpakets stehend sowie äquidistant zueinander angeordnet. Durch das Verbinden der Nutenstäbe untereinander, d.h. das Verbinden des Kopfabschnitts des ersten Kurzschlussstabs mit dem Fußbereich des in einer benachbarten Nut angeordneten zweiten Kurzschlussstabs oder Verbinden des Fußbereichs des ersten Kurzschlussstabs mit dem Kopfbereich des in einer benachbarten Nut angeordneten zweiten Kurzschlussstabs, ist der Kurzschluss-Käfig mit beiden Kurzschlussringen gebildet. Ein weiterer, zusätzlicher Montageschritt zur Verbindung der beiden Kurzschlussringe ist nicht erforderlich.

Hinsichtlich der weiteren Vorteile das erfindungsgemäße Montageverfahren zur Herstellung des erfindungsgemäßen Rotorpakets wird auf die vorstehenden Ausführungen den erfindungsgemäßen Kurzschlussläuferkäfig sowie das erfindungsgemäße Rotorpaket betreffend verwiesen.

In einer vorteilhaften Weiterbildung des Montageverfahrens werden zunächst alle ersten Kurzschlussstäbe in der ersten Richtung in die jeweiligen ersten Nuten eingeführt, bevor alle zweiten Kurzschlussstäbe in der zweiten Richtung in die zwischen den ersten Nuten angeordneten zweiten Nuten eingeführt werden. Auf diese Weise kann die Montage weiter vereinfacht werden.

In einer weiteren vorteilhaften Weiterbildung des Montageverfahrens werden die einzelnen Kurzschlussstäbe durch Schwei-ßen, Widerstandsschweißen, Verpressen oder Löten miteinander verbunden. Die genannten Fügeverfahren zeichnen sich aufgrund ihrer Prozessparameter sowie ihrer Einsatzmöglichkeiten durch eine hohe Eignung zur Herstellung zuverlässiger Verbindungen der einzelnen Kurzschlussstäbe aus.

Im Folgenden werden Ausführungsbeispiele des Kurzschlussläuferkäfigs sowie des Rotorpakets unter Bezug auf die beigefügten Figuren näher erläutert. In den Figuren sind:
- Figuren 1 bis 3: schematische Darstellungen eines ersten Ausführungsbeispiels des erfindungsgemäßen Kurzschlussläuferkäfigs sowie des erfindungsgemäßen Rotorpakets;
- Figuren 4 bis 6: schematische Darstellungen eines zweiten Ausführungsbeispiels des erfindungsgemäßen Kurzschlussläuferkäfigs sowie des erfindungsgemäßen Rotorpakets;
- Figuren 7 bis 9: schematische Darstellungen eines dritten Ausführungsbeispiels des erfindungsgemäßen Kurzschlussläuferkäfigs sowie des erfindungsgemäßen Rotorpakets;
- Figuren 10 bis 12: schematische Darstellungen eines vierten Ausführungsbeispiels des erfindungsgemäßen Kurzschlussläuferkäfigs sowie des erfindungsgemäßen Rotorpakets;
- Figur 13: eine schematische Darstellung des erfindungsgemäßen Montageverfahrens zur Herstellung des erfindungsgemäßen Rotorpakets.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

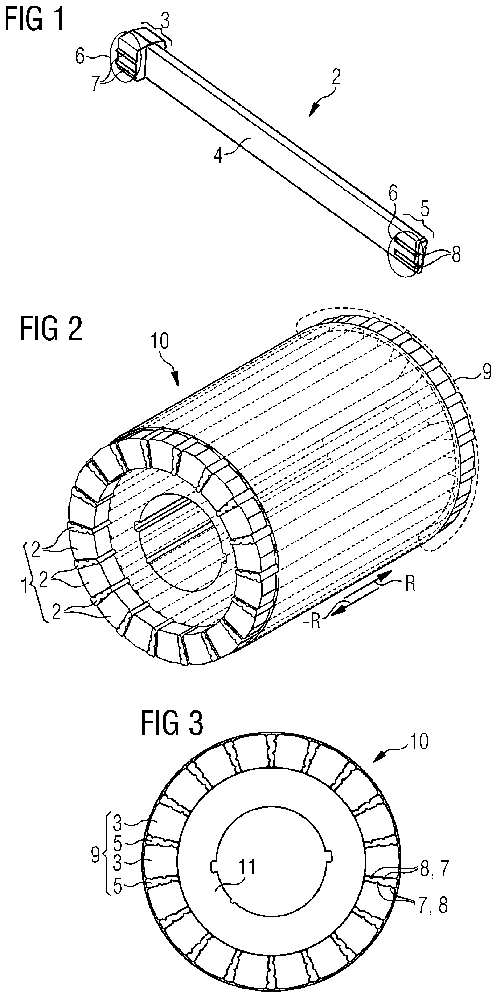

In den Figuren 1 bis 3 ist ein erstes Ausführungsbeispiel des erfindungsgemäßen Kurzschlussläuferkäfigs 1 für einen Asynchronmotor sowie ein damit gebildetes, erfindungsgemäßes Rotorpaket 10 des Asynchronmotors schematisch dargestellt. Figur 1 zeigt dabei einen einzelnen Kurzschlussstab 2 des Kurzschlussläuferkäfigs 1 in perspektivischer Ansicht. Der Kurzschlussstab 2 weist einen stabförmigen Grundkörper 4 auf, an dessen ersten Ende ein Kopfabschnitt 3 ausgebildet ist. An einem dem ersten Ende gegenüberliegenden zweiten Ende ist ein Fußbereich 5 ausgebildet. Sowohl der Kopfabschnitt 3 als auch der Fußbereich 5 weist jeweils auf beiden Seiten ein Verbindungsbereich 6 auf, über die der Kurzschlussstab 2 mit einem benachbart angeordneten, identischen weiteren Kurzschlussstab 2 verbindbar ist.

Der Kurzschlussstab 2 ist dabei aus einem massiven Halbzeug gebildet. Hierunter ist zu verstehen, dass der Kurzschlussstab 2 nicht durch ein Urformverfahren, beispielsweise durch ein Druckgussverfahren, hergestellt worden ist, sondern aus einem Halbzeug, beispielsweise einem stangenförmigen Strangpressprofil, mittels eines Umform- oder Trennverfahrens (bspw. Walzen, Gesenkschmieden oder Biegen, bzw. Drehen oder Fräsen) hergestellt ist. Der Kopfabschnitt 3 ist beispielsweise durch Stauchen des betreffenden Endes des Kurzschlussstabs 2 herstellbar.

In Figur 2 ist ein Rotorpaket 10 in perspektivischer Ansicht schematisch dargestellt; Figur 3 zeigt eine hierzu korrespondierende Ansicht auf eine der Stirnseiten des Rotorpakets 10. Das Rotorpaket 10 weist ein Rotorblechpaket 11 auf, welches aus mehreren in einer Richtung R gestapelter, ringförmiger Rotorbleche besteht. Die Richtung R, welche auch als Stapelrichtung bezeichnet werden kann, entspricht dabei der Achsrichtung des Rotorpakets 10 bzw. der Drehachse des Asynchronmotors. Jedes dieser Rotorbleche weist dabei eine vordefinierte Anzahl m an Öffnungen (nicht dargestellt) auf, welche entlang einer Kreislinie äquidistant zueinander angeordnet sind. Die Öffnungen sind beispielsweise durch Stanzen oder Laserschneiden herstellbar, wobei die geometrische Form der Öffnungen der Querschnittsfläche des stabförmigen Grundkörpers 4 der Kurzschlussstäbe 2 - zuzüglich eines montagebedingten Übermaßes - entspricht.

Beim Stapeln der Rotorbleche zu dem Rotorblechpaket 11 ist durch die übereinander liegend angeordneten Öffnungen eine vordefinierte Anzahl m an Nuten gebildet, in die jeweils einer der Kurzschlussstäbe 2 so eingeführt ist, dass dessen Fußbereich 5 über das eine Ende, und dessen Kopfabschnitt 3 über das andere Ende des Rotorblechpakets 11 hinausragt. Jede der Nuten stellt somit einen Aufnahmeraum für einen der Kurzschlussstäbe 2 dar. Die Kurzschlussstäbe 2 werden dabei alternierend bzw. antiparallel in die Nuten eingeführt, so dass der Kopfabschnitt 3 eines jeden Kurzschlussstabes 2 neben den Fußbereichen 5 der beiden links und rechts dazu benachbart angeordneten Kurzschlussstäbe 2 angeordnet ist. Die Anzahl n der hierfür benötigten Kurzschlussstäbe 2 entspricht somit der Anzahl m der im Rotorblechpakets 11 ausgebildeten Nuten. Im Falle einer geradzahligen Nutenanzahl werden je die Hälfte der Kurzschlussstäbe 2 in der Richtung R bzw. der Gegenrichtung -R in die Nuten eingeschoben. Auch eine ungeradzahlige Nutenanzahl ist möglich, wenn der letzte Kurzschlussstab mit einseitig schmalerem Kopfabschnitt ausgeführt ist, um einen benachbarten Kopfabschnitt 2 direkt zu kontaktieren, und zwischen die nebeneinanderliegenden Fußbereiche der beiden letzten Kurzschlussstäbe 2 ein zusätzlicher "Schlussstein" eingefügt wird.

Nach der Montage der Kurzschlussstäbe 2 sind diese somit parallel zueinander, die Mantellinien eines Zylinders bildend, antiparallel nebeneinander angeordnet, wobei ihre Orientierungsrichtung der Achsrichtung des Rotorpakets 10, d.h. der Richtung R bzw. der Gegenrichtung -R, entspricht. Durch Verbinden der Kopfabschnitte 3 mit den jeweils benachbart angeordneten Fußbereichen 5 ist an beiden Stirnseiten des Kurzschlussläuferkäfigs 1 jeweils ein Kurzschlussring 9 gebildet. Um die Kurzschlussringe 9 möglichst stabil zu gestalten und/oder um die Kontaktfläche zwischen den Stäben zu vergrö-ßern, können die kopfseitigen Verbindungsbereiche 6 der Kurzschlussstäbe 2 optional Stege 7 aufweisen, welche beim Montieren, d.h. beim Einschieben der Kurzschlussstäbe 2 in die Nuten des Rotorblechpakets 11 in fußseitig optional ausgebildeten Vertiefungen 8 der benachbart angeordneten Kurzschlussstäbe 2 eingreifen, wodurch ein konstruktiv stabiler Kurzschlussläuferkäfig 1 mit stirnseitigen Kurzschlussringen 9 gebildet ist.

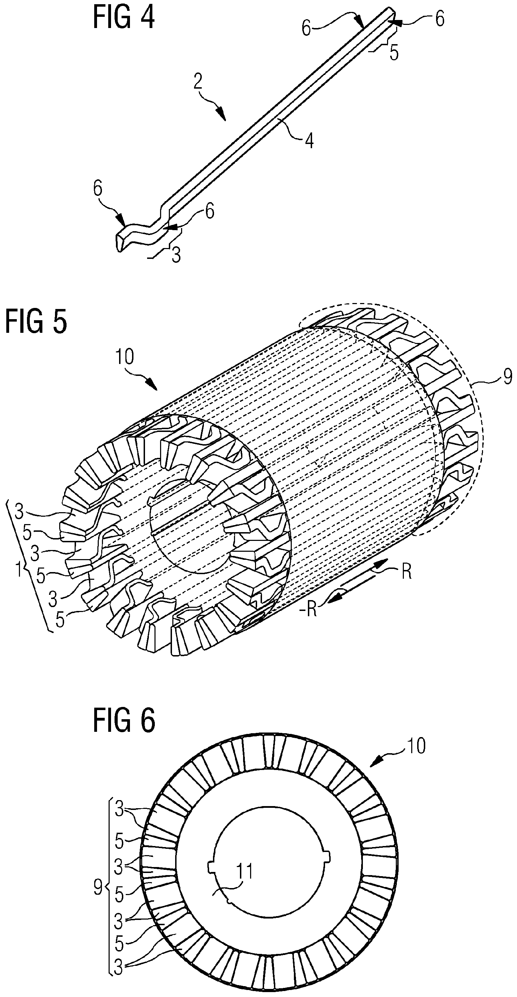

In den Figuren 4 bis 6 ist ein zweites Ausführungsbeispiel des erfindungsgemäßen Kurzschlussläuferkäfigs sowie des erfindungsgemäßen Rotorpakets schematisch dargestellt. Die einzelnen Kurzschlussstäbe 2 sind wiederum allesamt identisch und aus einem massiven Halbzeug, beispielsweise einem Strangpressprofil, hergestellt. Die einzelnen Ausführungsbeispiele unterscheiden sich lediglich in der Gestaltung Kopfabschnitte 3 sowie der Fußbereiche 5 der zum jeweiligen Ausführungsbeispiel gehörenden Kurzschlussstäbe 2. Die Länge des Grundkörpers 4 sowie dessen Querschnitt sind bei allen Ausführungsbeispielen identisch.

Figur 4 zeigt dabei wiederum einen einzelnen Kurzschlussstab 2 des Kurzschlussläuferkäfigs 1 in perspektivischer Ansicht. Der Kurzschlussstab 2 weist wiederum einen stabförmigen Grundkörper 4 auf, an dessen erstem Ende der Kopfabschnitt 3 ausgebildet ist. Der dargestellte Kopfabschnitt 3 ist beispielsweise durch Biegen eines stangenförmigen Halbzeugs herstellbar. An einem dem ersten Ende gegenüberliegenden zweiten Ende ist wiederum der Fußbereich 5 ausgebildet, der in diesem Ausführungsbeispiel einfach durch eine Verlängerung des Grundkörpers 4 gebildet ist.

In den Figuren 5 und 6 sind wiederum das aus diesen Kurzschlussstäben 2 gebildete Rotorpaket 10 in perspektivischer Ansicht bzw. eine hierzu korrespondierende Ansicht auf eine der Stirnseiten des Rotorpakets 10 schematisch dargestellt. Das Rotorpaket 10 weist ein zum ersten Ausführungsbeispiel identisches, aus mehreren in der Richtung R gestapelter, ringförmiger Rotorbleche bestehendes Rotorblechpaket 11 auf. Jedes dieser Rotorbleche weist wiederum eine vordefinierte Anzahl m an Öffnungen (nicht dargestellt) auf, durch die bei der Montage des Rotorblechpakets 11 eine vordefinierte Anzahl m an Nuten gebildet ist, in die jeweils einer der Kurzschlussstäbe 2 so eingeführt ist, dass dessen Fußbereich 5 über das eine Ende, und dessen Kopfabschnitt 3 über das andere Ende des Rotorblechpakets 11 hinausragt. Die Kurzschlussstäbe 2 sind wiederum alternierend bzw. antiparallel, d.h. der Richtung R bzw. der Gegenrichtung -R, in die Nuten eingeführt, so dass der Kopfabschnitt 3 eines jeden Kurzschlussstabes 2 neben den Fußbereichen 5 der beiden links und rechts dazu benachbart angeordneten Kurzschlussstäbe 2 angeordnet ist. Durch Verbinden der Kopfabschnitte 3 mit den jeweils benachbart angeordneten Fußbereichen 5 ist an beiden Stirnseiten des Kurzschlussläuferkäfigs 1 jeweils ein Kurzschlussring 9 gebildet.

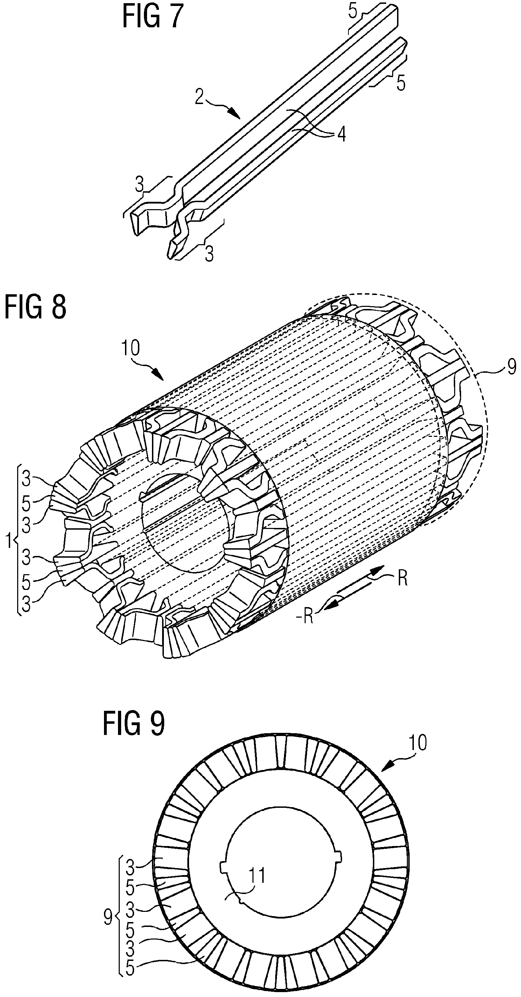

In den Figuren 7 bis 9 ist ein drittes Ausführungsbeispiel des erfindungsgemäßen Kurzschlussläuferkäfigs sowie des erfindungsgemäßen Rotorpakets schematisch dargestellt. Die einzelnen Kurzschlussstäbe 2 entsprechen dabei den in Figur 4 dargestellten Kurzschlussstäbe 2 des zweiten Ausführungsbeispiels. Im Unterschied dazu sind die Kurzschlussstäbe 2 in dem in den Figuren 4 bis 7 dargestellten dritten Ausführungsbeispiel jedoch unterschiedlich montiert: jeder zweite Kurzschlussstab 2 ist um 180° um seine Längsachse (Richtung R bzw. -R) gedreht, bevor er in die entsprechende Nut des Rotorblechpakets 11 eingeführt wird. Auf diese Weise ergibt sich der in den Figuren 8 und 9 dargestellte, abweichende Aufbau des Kurzschlussläuferkäfigs 1 und damit des Rotorpakets 10.

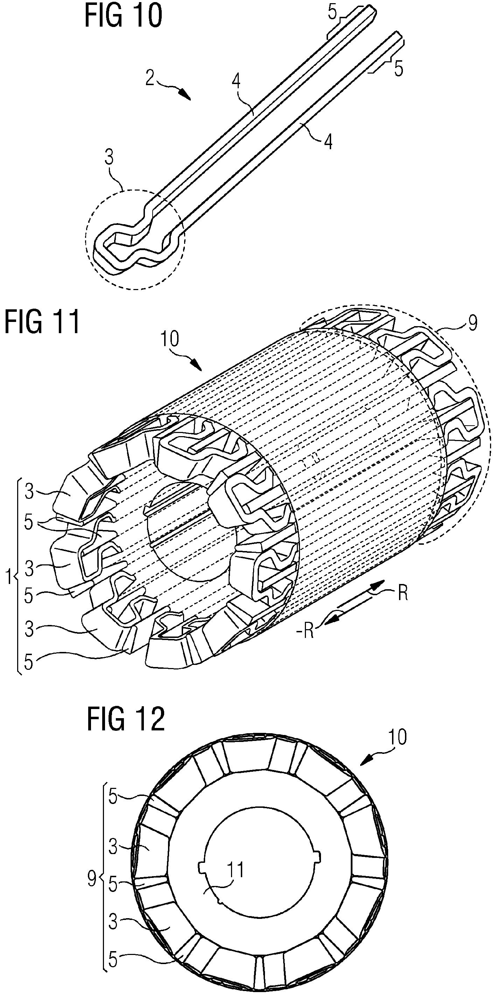

In den Figuren 10 bis 12 ist ein viertes Ausführungsbeispiel des erfindungsgemäßen Kurzschlussläuferkäfigs sowie des erfindungsgemäßen Rotorpakets schematisch dargestellt. im Unterschied zu den ersten drei Ausführungsbeispielen gemäß der Figuren 1 bis 9 sind in diesem vierten Ausführungsbeispiel die Kurzschlussstäbe 2 als sogenannte "Hairpins" ausgestaltet. Dabei handelt es sich um Kurzschlussstäbe 2, die zwei miteinander verbundene, parallel zueinander angeordnete stabförmige Grundkörper 4 mit jeweils einem Fußbereich 5 aufweisen. Der Kopfabschnitt 3 ist dabei durch den Verbindungsbereich der beiden stabförmigen Grundkörper 3 gebildet. Die Anzahl n der hierfür benötigten Kurzschlussstäbe 2 ist bei der Verwendung von Hairpins daher nur halb so groß wie die Anzahl m der im Rotorblechpaket 11 ausgebildeten Nuten.

Der in Figur 10 dargestellte Kurzschlussstab 2 ist beispielsweise durch mehrfaches Biegen einstückig aus einem massiven Halbzeug herstellbar. Bei der Montage der Kurzschlussstäbe 2 am Rotorblechpaket 11 werden jeweils die beiden stabförmige Grundkörper 4 eines Kurzschlussstabs 2 in jeweils eine Nut des Rotorblechpakets 11 in der Richtung R eingeführt, wobei zwischen diesen beiden Nuten eine weitere Nut ausgebildet ist, in die einer der stabförmigen Grundkörper 4 eines identischen Kurzschlussstabs 2 in der entgegengesetzten Richtung -R, , d.h. von der anderen Stirnseite des Rotorblechpakets 11 aus, in die betreffende Nut eingeführt wird. Auf diese Weise ist gewährleistet, dass wiederum der Fußbereich 5 eines jeden Kurzschlussstabs 2 neben dem Kopfabschnitt 3 des benachbart angeordneten Kurzschlussstabs 2 angeordnet ist.

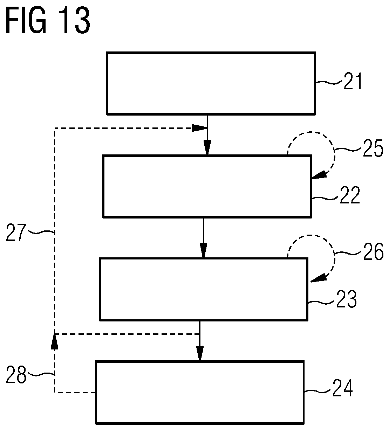

Abschließend wird anhand der schematischen Darstellung in Figur 13 das erfindungsgemäße Montageverfahren zur Herstellung des erfindungsgemäßen Rotorpakets 10 kurz beschrieben. Dabei weist das Rotorpaket 10 wiederum ein Rotorblechpaket 11 mit einer vordefinierten Anzahl m an in einer ersten Richtung R des Rotorpakets 10 parallel nebeneinander angeordneter Nuten auf. In einem ersten Schritt 21 des Montageverfahrens wird zunächst das Rotorblechpaket 11 bereitgestellt.

Anschließend wird in einem zweiten Schritt 22 zumindest ein erster Kurzschlussstab 2 in der ersten Richtung R in zumindest eine erste Nut eingeführt, d.h. eingeschoben. Als erste Nuten werden diejenigen Nuten bezeichnet, in die die Kurzschlussstäbe 2 in der ersten Richtung R eingeschoben werden. Bei diesem zweiten Schritt 22 ist es unerheblich, ob zunächst nur ein erster Kurzschlussstab 2 in der ersten Richtung R in die entsprechende erste Nut eingeführt wird, oder ob mehrere oder alle in der ersten Richtung R zu montierenden ersten Kurzschlussstäbe 2 in die entsprechenden ersten Nuten eingeführt werden. Diese Optionen sind durch den strichliert dargestellten ersten Wiederholungspfeil 25 symbolisiert.

In einem dritten Schritt 23 wird zumindest ein zweiter Kurzschlussstab 2 in einer zur ersten Richtung R entgegengesetzt orientierten zweiten Richtung -R in zumindest eine zur ersten Nut benachbarten zweite Nut eingeführt, d.h. eingeschoben. Hierbei ist es wiederum unerheblich, ob zunächst nur ein zweiter Kurzschlussstab 2 in der zweiten Richtung -R in die entsprechende zweite Nut eingeführt wird, oder ob mehrere oder alle in der zweiten Richtung -R zu montierenden zweiten Kurzschlussstäbe 2 in die entsprechenden zweiten Nuten eingeführt werden. Diese Optionen sind durch den strichliert dargestellten zweiten Wiederholungspfeil 26 symbolisiert. Sind nach Abschluss des dritten Schritts 23 noch nicht alle ersten Kurzschlussstäbe 22 in die ihnen zugeordneten ersten Nuten eingeführt, so können der zweite und ggf. der dritte Schritt erneut durchlaufen werden, bis schließlich alle ersten und zweiten Kurzschlussstäbe 22 in den ihnen jeweils zugeordneten ersten und zweiten Nuten aufgenommen sind. Diese Möglichkeit ist durch den dritten Wiederholungspfeil 27 symbolisiert.

In einem vierten Schritt 24 werden die zueinander benachbart angeordneten ersten und zweiten Kurzschlussstäbe 2 schließlich miteinander verbunden. Dieses Verbinden der ersten und zweiten Kurzschlussstäbe 2, d.h. der Kopfabschnitte 3 der ersten und zweiten Kurzschlussstäbe 2 mit den beiden jeweils dazu benachbart angeordneten Fußbereichen 5 der ersten und zweiten Kurzschlussstäbe 2, kann beispielsweise durch Schwei-ßen, Widerstandsschweißen, Verpressen oder Löten erfolgen. Prinzipiell wäre es ebenso möglich, bereits einen oder mehrere zueinander benachbart angeordnete ersten und zweite Kurzschlussstäbe 2 miteinander zu verbinden, bevor weitere erste und/oder zweite Kurzschlussstäbe 2 gemäß dem zweiten und/oder dritten Schritt in die jeweiligen Nuten eingeführt werden. Diese Option ist durch den vierten Wiederholungspfeil 28 dargestellt.

Bei den Kurzschlussstäben 2 kann es sich dabei sowohl um die einfachen Ausführungsformen mit nur einem stabförmigen Grundkörper 4 handeln, wie sie beispielhaft im ersten, zweiten oder dritten Ausführungsbeispiel dargestellt sind, als auch um Hairpins mit zwei stabförmigen Grundkörpern 4, wie sie beispielhaft im vierten Ausführungsbeispiel dargestellt sind.

### Bezugszeichenliste:

- 1: Kurzschlussläuferkäfig
- 2: Kurzschlussstab
- 3: Kopfabschnitt
- 4: stabförmiger Grundkörper
- 5: Fußbereich
- 6: Verbindungsbereich
- 7: Steg
- 8: Vertiefung
- 9: Kurzschlussring
- 10: Rotorpaket
- 11: Rotorblechpaket

- 21: erster Schritt
- 22: zweiter Schritt
- 23: dritter Schritt
- 24: vierter Schritt
- 25: erster Wiederholungspfeil
- 26: zweiter Wiederholungspfeil
- 27: dritter Wiederholungspfeil
- 28: vierter Wiederholungspfeil

- m: Anzahl an Nuten
- n: Anzahl an Kurzschlussstäben

- R: Achsrichtung
- -R: Gegenrichtung

## Patentansprüche

1. Kurzschlussläuferkäfig (1) für einen Asynchronmotor, aufweisend eine vordefinierte Anzahl (n) an Kurzschlussstäbe (2) zum Einsetzen in eine, in einem Rotorblechpaket (11) des Asynchronmotors ausgebildete, vordefinierte Anzahl (m) an Nuten, wobei jeder Kurzschlussstab einen Kopfabschnitt (3) mit einem daran angeformten stabförmigen Grundkörper (4), dessen dem Kopfabschnitt abgewandtes Ende einen Fußbereich (5) bildet, aufweist, wobei die Kurzschlussstäbe parallel zueinander derart nebeneinander angeordnet sind, dass jeder Kopfabschnitt (3) eines Kurzschlussstabes (2) mit den Fußbereichen (5) der beiden benachbart angeordneten Kurzschlussstäbe (2) verbunden ist, sodass durch die Kopfabschnitte (3) und die damit verbundenen Fußbereiche (5) an beiden Enden des Kurzschlussläuferkäfigs jeweils ein Kurzschlussring (9) gebildet ist.

2. Kurzschlussläuferkäfig (1) nach Anspruch 1,
wobei die Kurzschlussstäbe (2) mittels eines additiven Fertigungsverfahrens herstellbar sind.

3. Kurzschlussläuferkäfig (1) nach Anspruch 1,
wobei jeder der Kurzschlussstäbe (2) durch Umformen oder Trennen aus einem Halbzeug gebildet ist.

4. Kurzschlussläuferkäfig (1) nach einem der vorherigen Ansprüche, wobei der Kopfabschnitt (3) durch Stauchen des Grundkörpers (4) gebildet ist.

5. Kurzschlussläuferkäfig (1) nach einem der vorherigen Ansprüche, wobei der Kopfbereich (3) einen Verbindungsbereich darstellt, über den zwei daran angeformte, parallel verlaufende stabförmige Grundkörper (3) miteinander verbunden sind.

6. Kurzschlussläuferkäfig (1) nach einem der vorherigen Ansprüche, wobei die Kurzschlussstäbe (2) aus massivem Kupfer oder aus einer Kupferlegierung bestehen.

7. Kurzschlussläuferkäfig (1) nach einem der vorherigen Ansprüche, wobei die Kurzschlussstäbe (2) identisch sind.

8. Rotorpaket (10) für einen Asynchronmotor,
- mit einem Rotorblechpaket (11), aufweisend eine vordefinierte Anzahl (m) an Nuten,
- mit einer vordefinierten Anzahl (n) nach einem der Ansprüche 1 bis 7 gebildeter Kurzschlussstäbe (2), welche jeweils in zumindest eine der Nuten des Rotorblechpakets (11) eingeführt sind und mit benachbarten Kurzschlussstäben (2) derart verbunden sind, dass sie einen Kurzschlussläuferkäfig (1) bilden.

9. Montageverfahren zur Herstellung eines nach Anspruch 8 gebildeten Rotorpakets (10) eines Asynchronmotors, wobei das Rotorpaket (10) ein Rotorblechpaket (11) mit einer vordefinierten Anzahl (m) in einer ersten Richtung (R) des Rotorpakets parallel nebeneinander angeordneter Nuten aufweist, mit den Schritten:
a) Bereitstellen des Rotorblechpakets (11),
b) Einführen zumindest eines ersten Kurzschlussstabs (2) in der ersten Richtung (R) in zumindest eine erste Nut,
c) Einführen zumindest eines zweiten Kurzschlussstabs (2) in einer zur ersten Richtung (R) entgegengesetzten zweiten Richtung (-R) in zumindest eine zur ersten Nut benachbarten zweite Nut,
d) Verbinden der zueinander benachbart angeordneten ersten und zweiten Kurzschlussstäbe (2).

10. Montageverfahren nach Anspruch 8, wobei zunächst alle ersten Kurzschlussstäbe (2) in der ersten Richtung (R) in die jeweiligen ersten Nuten eingeführt werden, bevor alle zweiten Kurzschlussstäbe (2) in der zweiten Richtung (-R) in die zwischen den ersten Nuten angeordneten zweiten Nuten eingeführt werden.

11. Montageverfahren nach einem der Ansprüche 8 bis 9, wobei die einzelnen Kurzschlussstäbe (2) durch Schweißen, Widerstandsschweißen, Verpressen oder Löten miteinander verbunden werden.
